# EUROPÄISCHE PATENTANMELDUNG

(11) **EP 1 101 557 A1**
(43) Veröffentlichungstag der Anmeldung: **23.05.2001**
(21) Anmeldenummer: 00101950.4
(22) Anmeldetag: 01.02.2000
(51) Int. Cl.: B23D 29/00

(54) **Vorrichtung zum Durchtrennen von strangförmigem Gut**

(30) Priorität: 15.11.1999 DE 29920021 U
(71) Anmelder: Weidmüller Interface GmbH & Co., 32760 Detmold (DE)
(72) Erfinder: Wiebe, Ulrich, 32694 Dürentrop (DE)
(74) Vertreter: Urner, Peter, Dipl.-Phys.

(57) **Zusammenfassung**

Die Erfindung betrifft eine Vorrichtung zum Durchtrennen von strangförmigem Gut (29), mit einem Gegenlager (25 - 27) zum Abstützen des strangförmigen Guts (29), einem zylindrischen Trennstempel (18), der in Richtung seiner Zylinderlängsachse (17) auf das strangförmige Gut (29) zu bewegbar ist, und einer Antriebseinrichtung zum Antrieb des Trennstempels (18).

## Beschreibung

Die Erfindung betrifft eine Vorrichtung zum Durchtrennen von strangförmigem Gut gemäß dem Schutzanspruch 1.

Häufig muß strangförmiges Gut, etwa Stahlseile, und dergleichen, auch nach dessen Installation durchtrennt werden. Dies kann zum Beispiel bei bestimmten Gefahrensituation der Fall sein. Bricht etwa infolge schwerer See bei einem Segelschiff der Mast, so müssen die Wanten schnell durchschnitten werden, um etwa ein Kentern des Segelschiffs zu verhindern. Das Durchtrennen der Wanten ist relativ kraftaufwendig, da diese häufig aus einer großen Anzahl miteinander verdrillter Stahldrähte bestehen. Herkömmliche Vorrichtungen zum Durchschneiden von Wanten, etwa Kabelschneider, müssen daher relativ groß ausgebildet sein und sind somit schwer und unhandlich. Sie sind andererseits mit beiden Händen zu betätigen, so daß sich eine mit dieser Aufgabe betraute Person an Bord eines Segelschiffs kaum noch sichern kann.

Der Erfindung liegt die Aufgabe zugrunde, eine Vorrichtung der eingangs genannten Art zur Verfügung zu stellen, die nur mit einer Hand betätigbar ist und einen einfachen und kostengünstigen Aufbau aufweist.

Die Lösung der gestellten Aufgabe ist im Anspruch 1 angegeben. Vorteilhafte Ausgestaltungen der Erfindung sind den Unteransprüchen zu entnehmen.

Eine erfindungsgemäße Vorrichtung zum Durchtrennen von strangförmigem Gut zeichnet sich aus durch ein Gegenlager zum Abstützen des strangförmigen Guts; einen zylindrischen Trennstempel, der in Richtung seiner Zylinderlängsachse auf das strangförmige Gut zu bewegbar ist; und eine Antriebseinrichtung zum Antrieb des Trennstempels.

Eine derartige Vorrichtung läßt sich relativ leicht und handlich ausbilden, so daß sie von einem Benutzer nur mit einer Hand betätigt zu werden braucht, was in einer Gefahrensituation die Sicherheit des Benutzers erhöht, da seine andere Hand frei ist und er sich mit dieser sichern kann.

Durch die erfindungsgemäße Vorrichtung wird darüber hinaus infolge der Verwendung der Antriebseinrichtung, die zum Beispiel eine explosionsbetriebene Antriebseinrichtung, ein Wasserstrahl, ein Stößel, und dergleichen, sein kann, genügend Kraft zur Verfügung gestellt, so daß auch stärkeres strangförmiges Gut mühelos durchtrennt werden kann, etwa aus Stahl bestehende Wanten bei Segelschiffen. Da der Trennstempel zylindrisch ausgebildet ist, läßt er sich in einfacher Weise zum Beispiel als Drehteil herstellen, was die Fertigungskosten einer Vorrichtung der genannten Art erheblich reduziert. Seine dem zu durchtrennenden Gut zugewandte Stirnseite braucht auch nicht in besonderer Weise bearbeitet zu werden, um dort etwa eine messerartig verlaufende Schneidkante auszubilden. Die durch die Antriebseinrichtung zur Verfügung gestellte Kraft ist so groß, daß der Trennstempel auch dann mühelos durch das zu durchtrennende strangförmige Gut hindurchgeführt werden kann, wenn seine diesbezügliche Stirnseite stumpf ausgebildet ist. Auch insofern ergibt sich eine Verringerung der Herstellungskosten. Bezüglich des Gegenlagers gilt das oben gesagte ebenfalls. Auch dort braucht keine spitz verlaufende Schneidkante vorhanden zu sein, die mit einer am Trennstempel vorhandenen Schneidkante zusammenwirkt. Es genügt, wenn das Gegenlager lediglich einen Halteabschnitt für das strangförmige Gut aufweist, der das strangförmige Gut so positioniert, daß es mit seiner Längsrichtung etwa senkrecht zur Zylinderlängsachse des Trennstempels steht. Insofern ergeben sich auch verringerte Herstellungskosten für das Gegenlager bzw. für dasjenige Teil, an welchem das Gegenlager ausgebildet ist.

Nach einer sehr vorteilhaften Weiterbildung der Erfindung ist der Trennstempel um seine Zylinderlängsachse frei drehbar. Die Drehstellung des Trennstempels kann sich somit statistisch nach jedem Trennprozeß neu einstellen, so daß stets andere vorderseitige Umfangsschnitte des Trennstempels zusammen mit dem Gegenlager für eine Durchtrennung des strangförmigen Guts sorgen, was die Lebensdauer des Trennstempels erhöht.

Nach einer weiteren vorteilhaften Ausgestaltung der Erfindung weist der Trennstempel an seiner dem strangförmigen Gut zugewandten Stirnseite eine Umfangskante auf, die vollständig in einer senkrecht zur Zylinderlängsachse liegenden Ebene verläuft. Dadurch werden gleichmäßigere Betriebsbedingungen erhalten, wenn sich der Trennstempel nach jedem Trennvorgang dreht. Ein derartiger Trennstempel läßt sich auch besonders einfach herstellen, da er lediglich aus einem zylindrischen Bauteil zum Beispiel durch einen Sägeprozeß, einen Abdrehvorgang, oder dergleichen, herausgetrennt zu werden braucht.

In weiterer Ausgestaltung der Erfindung ist der Trennstempel in einem zylindrischen Kanal eines ersten Gehäuseteils geführt, welches am Ausgang des zylindrischen Kanals das Gegenlager aufweist. Dieses erste Gehäuseteil läßt sich ebenfalls kostengünstig fertigen, da sich der zylindrische Kanal relativ einfach realisieren läßt, etwa durch Verwendung eines bereits rohrförmig ausgebildeten Grundelements für das Gehäuseteil oder durch Einbringen einer Bohrung in einen Rohling. Zur Ausbildung des Gegenlagers bedarf es ebenfalls keiner besonderen Maßnahmen, wie bereits oben erwähnt.

Dabei kann in noch weiterer Ausgestaltung der Erfindung das erste Gehäuseteil jenseits des Gegenlagers auch einen Anschlag für den Trennstempel aufweisen, um definitiv zu verhindern, daß der Trennstempel aus irgendeinem Grund aus der Vorrichtung austreten kann.

Vorzugsweise umfaßt die Antriebseinrichtung einen Antriebskolben, der den Trennstempel beaufschlagt. Der Antriebskolben selbst kann in jeder beliebigen Weise angetrieben werden, etwa durch Gasdruck, durch einen Wasserstrahl, durch einen Stößel, und dergleichen. Dabei kann der Antriebskolben um seine Kolbenlängsachse frei drehbar gelagert und mit dem Trennstempel gekoppelt sein. Dadurch wird es möglich, den Trennstempel nach einem Trennprozeß wieder in seine Ausgangslage zurückzuführen, indem der Antriebskolben in seine Ausgangslage zurückgeführt wird. Der Antriebskolben nimmt dann den Trennstempel mit. Dies kann dadurch geschehen, daß eine Druckfeder den Antriebskolben umgibt, die sich an einem Kopf des Antriebskolbens und wenigstens mittelbar am ersten Gehäuseteil abstützt. Der Antriebskolben selbst ist in einem Zylinderkanal eines zweiten Gehäuseteils geführt, welches mit dem ersten Gehäuseteil verbindbar ist. Erstes und zweites Gehäuseteil können zum Beispiel koaxial miteinander verschraubt sein. Vorzugsweise befindet sich auch ein Anschlagdämpfer innerhalb des zweiten Gehäuseteils und koaxial zum Antriebskolben, wobei der Kopf des Antriebskolbens gegen den Anschlagdämpfer schlägt, wenn der Antriebskolben in Richtung zum Gegenlager bewegt wird.

Nach einer anderen Weiterbildung der Erfindung kann die Kopplung zwischen Antriebskolben und Trennstempel wenigstens in Richtung der Kolbenlängsachse ein Spiel aufweisen, um Bewegungsraum zwischen beiden Elementen zu belassen, wenn sie sich gegen den Anschlagdämpfer bzw. den jenseits des Gegenlagers befindlichen Anschlag bewegen.

Die Erfindung wird nachfolgend unter Bezugnahme auf ein Ausführungsbeispiel näher erläutert. Es zeigen:
**Figur 1** einen Axialschnitt durch einen vorderen Bereich der Vorrichtung zum Durchtrennen von strangförmigem Gut;
**Figur 2** einen Schnitt entlang der Linie A - A von Figur 1;
**Figur 3** eine Draufsicht auf ein Gegenlager der Vorrichtung nach Figur 1;
**Figur 4** den vorderen Teil der Vorrichtung nach Figur 1 mit im Gegenlager befindlichem strangförmigem Gut; und
**Figur 5** einen Zustand der Vorrichtung nach Figur 1, bei dem das strangförmige Gut durchtrennt wurde.

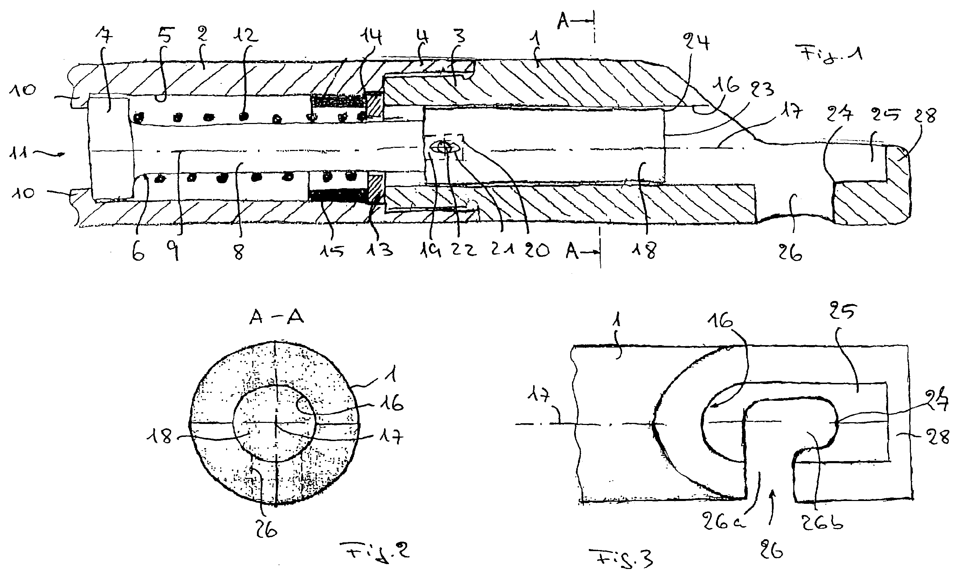

Die Figur 1 zeigt einen Axialschnitt im vorderen Bereich der erfindungsgemäßen Vorrichtung. Zur Trennvorrichtung nach Figur 1 gehören ein erstes hülsenförmiges Gehäuseteil 1 und ein zweites hülsenförmiges Gehäuseteil 2. Beide hülsenförmigen Gehäuseteile 1 und 2 sind koaxial miteinander verschraubt, wobei das erste hülsenförmige Gehäuseteil 1 einen nach hinten weisenden Ansatz 3 mit Außengewinde aufweist, auf das ein Innengewinde aufgeschraubt ist, das sich an einem vorderen Ansatz 4 des zweiten hülsenförmigen Gehäuseteils 2 befindet.

Im zweiten hülsenförmigen Gehäuseteil 2 befindet sich ein Zylinderkanal 5. In diesem Zylinderkanal 5 ist ein Antriebskolben 6 gleitend verschiebbar gelagert. Der Antriebskolben 6 weist einen Kolbenkopf 7 auf, der einstückig mit einer Kolbenstange 8 verbunden ist. Die Längsachse der Kolbenstange 8 liegt koaxial zur Längsachse 9 des Zylinderkanals 5.

An seinem links in Figur 1 liegenden Ende weist das zweite hülsenförmige Gehäuseteil 2 einen nach innen zeigenden Umfangsflansch 10 auf. Der Umfangsflansch 10 dient zur Bildung einer Öffnung 11, deren Durchmesser kleiner ist als der Durchmesser des Zylinderkanals 5. Über diese Öffnung 11 wirkt eine Antriebskraft auf den Antriebskolben 6, um ihn in Richtung des ersten hülsenförmigen Gehäuseteils 1 zu treiben. Diese Antriebskraft kann zum Beispiel durch Verbrennung eines Luft-/Brenngasgemisches erzeugt werden, durch Zündung eines Explosivstoffes, durch einen Wasserstrahl, durch einen weiteren Stößel, und dergleichen. Dabei ist der Außendurchmesser des Kolbenkopfes 7 größer als der Durchmesser der Öffnung 11. Der Kolben 6 wird mittels einer Druckfeder 12 in seine in Figur 1 gezeigte Ruhestellung gedrückt. Diese Druckfeder 12 umgibt die Kolbenstange 8 wendelartig und stützt sich einerseits an der Innenfläche des Kolbenkopfes 7 ab. Andererseits stützt sich die Druckfeder 8 an einer Ringscheibe 13 ab, die die Kolbenstange 8 nur mit relativ wenig Spiel umgibt und an derjenigen Stirnseite des zweiten hülsenförmigen Gehäuseteils 2 sitzt, das zum ersten hülsenförmigen Gehäuseteil 1 weist. Hierzu ist die Ringscheibe 13 in eine koaxiale Ausnehmung 14 des zweiten hülsenförmigen Gehäuseteils 2 eingesetzt. In diese Ausnehmung 14 wird die Ringscheibe 13 hineingedrückt, wenn das erste hülsenförmige Gehäuseteil 1 in das zweite hülsenförmige Gehäuseteil 2 hineingeschraubt wird. Die Ringscheibe 13 sitzt dann fest zwischen ersten und zweitem hülsenförmigen Gehäuseteil 1, 2.

Im Zylinderkanal 5 findet sich ferner ein Anschlagdämpfer 15. Er ist ringförmig ausgebildet und liegt koaxial zur Längsachse 9 des Zylinderkanals 5. Der Anschlagdämpfer 15 besteht aus elastischem Material und schmiegt sich an die Innenwand des Zylinderkanals 5 an. Er kommt dabei an der Seite der Ringscheibe 13 zu liegen. Wird der Kolben 6 mittels der Antriebskraft nach rechts in Figur 1 verschoben, so trifft er mit voller Wucht auf den Anschlagdämpfer 15 auf und wird durch ihn in seiner Bewegung gebremst. Die Rückstellung in die Ausgangslage erfolgt dann mit Hilfe der Druckfeder 12, wie bereits erwähnt.

Im Innern des ersten hülsenförmigen Gehäuseteils 1 befindet sich ein zylindrischer Kanal 16, dessen Zylinderlängsachse 17 mit der Längsachse 9 des Zylinderkanals 5 fluchtet. Innerhalb des zylindrischen Kanals 16 ist ein zylindrischer Trennstempel 18 verschiebbar angeordnet. Die Zylinderlängsachse des Trennstempels 18 fluchtet mit der Zylinderlängsachse 17 des zylindrischen Kanals 16. Der Trennstempel 18 ist an seinem dem zweiten hülsenförmigen Gehäuseteil 2 zugewandten Ende mit der Kolbenstange 8 gekoppelt. Hierzu ragt ein zylindrischer Koaxialansatz 19 am freien Ende der Kolbenstange 8 in eine zylindrische Ausnehmung 20 hinein, die sich in der der Kolbenstange 8 gegenüberliegenden Stirnseite des Trennstempels 18 befindet. Im Bereich dieser zylindrischen Ausnehmung 20 befinden sich einander gegenüberliegend zwei Langlöcher 21, die sich in Richtung der Zylinderlängsachse 17 erstrecken. Sie liegen unter einem Winkelabstand von 180° zueinander. In beiden Langlöchern 21 kommt mit seinen freien Enden ein Stift 22 zu liegen, der zentral durch den Koaxialansatz 19 hindurchgeführt ist. Auf diese Weise sind Kolben 6 und Trennstempel 18 miteinander gekoppelt, wobei ein Spiel in Richtung der Achsen 9 bzw. 17 vorhanden ist. Beide Bauteile 6 und 18 sind über den Stift 22 auch so miteinander gekoppelt, daß sie sich gemeinsam in Umfangsrichtung drehen können. Die Winkellage beider Bauteile ist nicht arretiert, so daß sie sich nach jedem Arbeitsvorgang neu und statistisch einstellt.

Der Trennstempel 18 ist hier als Vollzylinder ausgebildet. Es könnte sich bei ihm aber auch um einen dickwandigen Hohlzylinder handeln. Seine vom Kolben 6 wegweisende Stirnfläche 23 ist als ebene Fläche ausgebildet und steht senkrecht zur Zylinderlängsachse 17. Der Trennstempel 18 weist somit im Umfangsbereich der Stirnfläche 13 eine Umfangskante 24 auf, die vollständig in der senkrecht zur Zylinderlängsachse 17 liegenden Ebene verläuft. Mit anderen Worten steht die Stirnfläche 23 im rechten Winkel zur Umfangsfläche des Trennstempels 18.

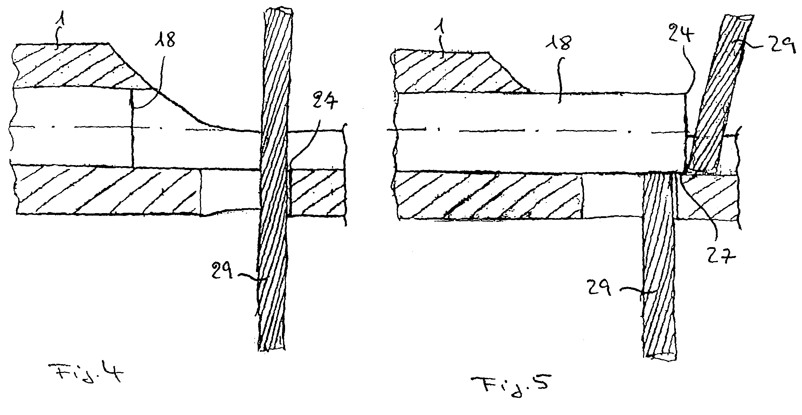

Die Figur 2 zeigt einen Querschnitt durch das erste hülsenförmige Gehäuseteil 1 entlang der Linie A - A von Figur 1. Dagegen zeigt die Figur 3 eine Draufsicht auf das freie Ende des ersten hülsenförmigen Gehäuseteils 1.

Die Figuren 1 bis 3 lassen erkennen, daß das erste hülsenförmige Gehäuseteil 1 an seinem freien Ende etwa bis zur Zylinderlängsachse 17 abgetragen ist und dort nur eine Höhe aufweist, die dem halben Durchmesser entspricht. Der zylindrische Kanal 16 erstreckt sich in diesen Teil als halbrunde Rinne hinein. Sie trägt das Bezugszeichen 25. In diese halbrunde Rinne 25 ist seitlich ein Schlitz eingebracht, der das Bezugszeichen 26 trägt. Er erstreckt sich noch ein wenig über die Zylinderlängsachse 17 hinaus und verläuft dann ein Stück parallel in Richtung der Zylinderlängsachse 17 zum freien Ende des ersten hülsenförmigen Gehäuseteils 1 hin, ohne dieses jedoch zu erreichen. In der Draufsicht nach Figur 3 ist der Schlitz 26 rechtwinkelförmig ausgebildet. Er besteht aus einem radial verlaufenden Teil 26a und einem in Längsrichtung der Zylinderlängsachse 17 verlaufenden Teil 26b. Sämtliche Wandungen des Schlitzes 26 stehen in Figur 3 senkrecht zur Zeichenebene. Insbesondere steht die Schlitzwandung im Bereich 26b am Ort der Zylinderlängsachse 17 senkrecht zum Boden der halbrunden Rinne 25, so daß eine rechtwinklige Kante 27 an diesem Ort erhalten wird, wie die Figur 1 zeigt. Die halbrunde Wanne 25 ist am freien Ende des ersten hülsenförmigen Gehäuseteils 1 durch einen stirnseitigen Anschlag 28 verschlossen, der einstückig mit dem ersten hülsenförmigen Gehäuseteil 1 verbunden ist. Er verhindert, daß der Trennstempel 18 vollständig aus dem ersten hülsenförmigen Gehäuseteil 1 austreten kann.

Die Figuren 4 und 5 zeigen nochmals den Betrieb der erfindungsgemäßen Vorrichtung. Ein bereits installiertes Seil 29, beispielsweise ein Stahlseil, wird mit Hilfe der erfindungsgemäßen Vorrichtung zunächst eingefangen, indem die Vorrichtung so positioniert wird, daß das Stahlseil 29 über den Bereich 26a des Schlitzes 26 in den Bereich 26b gelangt. Dies kann durch seitliches Ansetzen und Ziehen der Vorrichtung relativ zum Seil 29 erfolgen. Das Seil 29 kommt dann an der Kante 27 zu liegen. Dieser Zustand ist in Figur 4 dargestellt. Wird jetzt ein Auslösemechanismus der Vorrichtung betätigt, so wird der Antriebskolben 6 angetrieben und mit ihm der Trennstempel 18. Letzterer wird nach vorne geschoben und durchtrennt dabei das Seil 29 durch Zusammenwirken der an sich stumpfen Kanten 24 und 27. Dieser Zustand ist in Figur 5 gezeigt. Anschließend wird der Trennstempel 18 wieder in seine Ausgangslage zurückbewegt, und zwar durch Wirkung der Druckfeder 12, die den Antriebskolben 6 zurückbewegt, der seinerseits den Trennstempel 18 mitnimmt.

Die Winkellage von Antriebskolben 6 und Trennstempel 18 kann sich dabei verändern, so daß bei einem nächsten Trennprozeß ein anderer Umfangsabschnitt der Kante 24 mit der Kante 27 zusammenwirkt. Dies erhöht die Lebensdauer des Trennstempels 18. Natürlich wäre es auch möglich, die Stirnfläche 23 nach innen auszubilden, zum Beispiel konisch oder in anderer Weise, um eine scharfe umlaufende Kante 24 zu erhalten. Auch hier ergäbe sich infolge der Drehung des Trennstempels 18 eine erhöhte Lebensdauer.

## Patentansprüche

1. Vorrichtung zum Durchtrennen von strangförmigem Gut (29), mit: - einem Gegenlager (25 - 27) zum Abstützen des strangförmigen Guts (29);
- einem zylindrischen Trennstempel (18), der in Richtung seiner Zylinderlängsachse (17) auf das strangförmige Gut (29) zu bewegbar ist, und
- einer Antriebseinrichtung zum Antrieb des Trennstempels (18).

2. Vorrichtung nach Anspruch 1, **dadurch gekennzeichnet**, daß der Trennstempel (18) um seine Zylinderlängsachse (17) frei drehbar ist.

3. Vorrichtung nach Anspruch 1 oder 2, **dadurch gekennzeichnet**, daß der Trennstempel (18) an seiner dem strangförmigen Gut (29) zugewandten Stirnseite eine Umfangskante (24) aufweist, die vollständig in einer senkrecht zur Zylinderlängsachse (17) liegenden Ebene (23) verläuft.

4. Vorrichtung nach einem der Ansprüche 1 bis 3, **dadurch gekennzeichnet**, daß der Trennstempel (18) in einem zylindrischen Kanal (16) eines ersten Gehäuseteils (1) geführt ist, welches am Ausgang des zylindrischen Kanals (16) das Gegenlager (25 - 27) aufweist.

5. Vorrichtung nach Anspruch 4, **dadurch gekennzeichnet**, daß das erste Gehäuseteil (1) jenseits des Gegenlagers (25 - 27) einen Anschlag (28) für den Trennstempel (18) aufweist.

6. Vorrichtung nach einem der Ansprüche 1 bis 5, **dadurch gekennzeichnet**, daß die Antriebseinrichtung einen Antriebskolben (6) aufweist, der den Trennstempel (18) beaufschlagt.

7. Vorrichtung nach einem der Ansprüche 2 bis 6, **dadurch gekennzeichnet**, daß der Antriebskolben (6) um seine Kolbenlängsachse (9) frei drehbar gelagert und mit dem Trennstempel (18) gekoppelt ist.

8. Vorrichtung nach Anspruch 7, **dadurch gekennzeichnet**, daß die Kopplung in Richtung der Kolbenlängsachse (9) ein Spiel aufweist.

9. Vorrichtung nach einem der Ansprüche 6 bis 8, **dadurch gekennzeichnet**, daß der Antriebskolben (6) in einem Zylinderkanal (5) eines zweiten Gehäuseteils (2) geführt ist, welches mit dem ersten Gehäuseteil (1) verbindbar ist.

10. Vorrichtung nach einem der Ansprüche 7 bis 9, **dadurch gekennzeichnet**, daß der Antriebskolben (6) von einer Rückstelleinrichtung beaufschlagt ist, die ihn in seine Ausgangslage zurückführt.

11. Vorrichtung nach Anspruch 10, **dadurch gekennzeichnet**, daß die Rückstelleinrichtung eine den Antriebskolben (6) umgebende Druckfeder (12) ist, die sich an einem Kopf (7) des Antriebskolbens (6) und wenigstens mittelbar am ersten Gehäuseteil (1) abstützt.

12. Vorrichtung nach Anspruch 11, **dadurch gekennzeichnet**, daß koaxial zum Antriebskolben (6) ein Anschlagdämpfer (15) im Zylinderkanal (5) angeordnet ist, gegen den der Kopf (7) des Antriebskolbens (6) schlägt.
